# DEMANDE DE BREVET EUROPEEN

(11) **EP 2 144 445 A2**
(43) Date de publication de la demande: **13.01.2010**
(21) Numéro de dépôt: 09163052.5
(22) Date de dépôt: 18.06.2009
(51) Int. Cl.: H04N 7/26

(54) **Procédé de codage vidéo avec mode non compressé et dispositif mettant en oeuvre le procédé**

(30) Priorité: 23.06.2008 FR 0854134
(71) Demandeur: THOMSON LICENSING, 92100 Boulogne-Billancourt (FR)
(72) Inventeur: Tchernatinsky, Lionel, Rennes (FR); Lorvellec, Karine, 35520 La Meziere (FR); Mailleux, Denis, 35500 Vitre (FR)
(74) Mandataire: Lucas, Laurent Jacques

(57) **Abrégé**

La présente invention se rapporte à un procédé de codage vidéo comportant un mécanisme permettant d'activer ou de désactiver la compression des macroblocs du flux vidéo à coder en fonction de l'efficacité de la compression et fonctionnant dans au moins deux modes, un premier mode de codage normal et un second mode non compressé, ledit procédé étant **caractérisé en ce que** : en mode de codage normal, le macrobloc (1) en cours de traitement est compressé par une boucle d'encodage puis par un codeur entropique (2), ladite compression étant considérée efficace (3) si la taille qu'occupe le macrobloc après compression est sensiblement inférieure à la taille qu'occupe le macrobloc sans compression ; dans le cas ou la compression du macrobloc en cours de traitement n'est pas efficace, le mode non compressé est activé (4), ledit mode non compressé étant caractérisé par le fait que les échantillons correspondant au macrobloc en cours de traitement reconstruit par le décodeur local de la boucle d'encodage sont transmis sans compression en sortie du codeur (6).

L'invention a aussi pour objet un dispositif de codage vidéo mettant en oeuvre le procédé.

## Description

L'invention concerne un procédé et un dispositif de codage vidéo et s'applique notamment aux domaines de la transmission, de l'analyse, du décodage et du transcodage de vidéo.

Une séquence vidéo comporte de par sa nature même une importante redondance statistique tant dans le domaine temporel que spatial. La volonté d'utiliser toujours plus efficacement la bande passante des média de transmissions sur lesquels transitent ces séquences et les objectifs de réduction du coût de leur stockage ont posé très tôt la question de la compression vidéo. Les techniques classiques de compression vidéo peuvent généralement se diviser en deux étapes. La première vise à réduire la redondance spatiale et pour cela à compresser une image fixe. L'image est tout d'abord divisée en blocs de pixels (de 4x4 ou 8x8 selon, par exemple, les standards MPEG-1/2/4), un passage dans le domaine fréquentiel puis une quantification permettent d'approximer ou de supprimer les hautes fréquences auxquelles l'oeil est moins sensible, et enfin les données quantifiées sont codées entropiquement. La seconde a pour but de réduire la redondance temporelle. Cette technique permet de prédire une image à partir d'une ou plusieurs autre(s) image(s) de référence(s) précédemment décodée(s) au sein de la même séquence (estimation de mouvement). Cette technique consiste à chercher dans ces images de référence le bloc qui correspond le mieux à celui à prédire, et seul est conservé un vecteur estimation de mouvement correspondant au déplacement du bloc entre les deux images ainsi qu'une erreur résiduelle permettant de raffiner le rendu visuel.

Un encodeur vidéo classique traitant un signal vidéo après découpage des images en macroblocs est composé notamment des deux éléments fonctionnels suivants :
- une boucle d'encodage réalisant le passage dans le domaine fréquentiel, la quantification, la compensation de mouvement, la prédiction intra et le filtre de boucle ;
- un codeur entropique réalisant une compression sans perte du signal après quantification du signal, par exemple, avec un codage de Huffman ou un codage arithmétique.

Un macrobloc est compressé en étant traité tout d'abord par la boucle d'encodage puis par le codeur entropique. Dans un système classique, ces deux étapes peuvent être considérées comme indépendantes.

Les techniques de compression utilisant l'estimation de mouvement et la prédiction intra s'avèrent très efficaces en pratique. Pourtant, pour certaines images d'un flux vidéo et/ou lorsque la quantification utilise un pas très faible, la compression donne des résultats peu probants. II est possible notamment d'avoir en sortie du codeur vidéo un nombre de bits après compression supérieur au nombre de bits de la source. II est dans ce cas plus avantageux de transmettre le flux en mode non-compressé, c'est-à-dire transmettre en sortie de l'encodeur vidéo les échantillons de la source vidéo correspondant au macrobloc en cours de traitement. A titre d'exemple, la norme H.264 définit un mode non-compressé appelé mode I_PCM. Lorsque ce mode est activé, les échantillons sources, à savoir les composantes de luminance et de chrominance représentant les pixels de l'image, sont envoyées directement vers le bloc fonctionnel réalisant le codage entropique et y sont formatés. Dans ce cas, aucune compression n'est appliquée. II existe deux cas d'utilisation du mode de codage I_PCM dans la norme H.264:
- utilisation en mode de codage standard : le mode I_PCM peut être utilisé par un encodeur au même titre que l'ensemble des autres modes proposés; il est à noter que le débit généré par macrobloc est alors constant ;
- utilisation en mode de repli : une taille maximum est imposée au flux de bits généré pour le codage d'un macrobloc. Cela signifie que si le nombre de bits correspondant à un macrobloc après compression dépasse une valeur limite, le mode I_PCM est utilisé et les échantillons de la source vidéo sont directement transmis.

La valeur limite imposée par le standard pour l'utilisation en mode de repli est fixée à la valeur pour laquelle un encodeur cesse de réduire le débit et où il devient plus intéressant de transmettre directement la source. Par exemple, lors du codage 4:2:0 sur 8 bits, un macrobloc est représenté sur 3072 bits. La norme H.264 définit un nombre maximum de bits, soit 3200 bits, au-delà duquel l'utilisation du mode de codage I_PCM est requise. Le nombre de bits nécessaires au codage d'un macrobloc non-compressé correspond aux bits nécessaires à la transmission des échantillons luminance et chrominance, soit les 3072 bits précédemment cités ainsi que les bits nécessaires à la transmission des informations de mode (mb_type et mb_skip_flag, par exemple). La décision d'utiliser ce mode de codage ainsi que l'implémentation du mode I_PCM, lorsque que l'on considère le mode de repli, se fait au niveau du codeur entropique. Celui-ci vérifie après le traitement de chaque macrobloc par la boucle d'encodage et codage entropique le nombre de bits générés. Si ce nombre est supérieur à la limite de 3200 bits, les bits générés sont retirés du flux de bits final, les contextes de codage sont restaurés, c'est-à-dire que le codeur entropique revient à un état précédent dans lequel il se trouvait en début de macrobloc, et les échantillons sources sont envoyés dans le flux de bits. Lorsque le mode I_PCM est choisi par le codeur entropique, un signal de contrôle appelé 'I_PCM_control' est activé et est propagé par exemple aux blocs fonctionnels de la boucle d'encodage réalisant les prédictions (intra et inter), au bloc réalisant la reconstruction et éventuellement à d'autres blocs de l'encodeur suivant le choix d'implémentation.

Le codage d'un macrobloc dépend du codage de ses voisins. Par exemple, dans le cas de la norme H.264, il y a une dépendance spatiale du macrobloc courant vis-à-vis du macrobloc situé à sa gauche et du macrobloc situé au dessus de celui-ci. Idéalement, il faut que le codage de ces macroblocs soit terminé avant de pouvoir traiter le macrobloc courant.

Afin d'optimiser l'implémentation de l'encodeur et d'éviter un traitement purement séquentiel macrobloc après macrobloc, il est usuel de paralléliser le traitement des macroblocs. Du fait de la séparation fonctionnelle de la boucle d'encodage et du codeur entropique, le macrobloc courant peut-être traité avant que le traitement des blocs adjacents ne soit terminé. Par exemple, si le bloc de gauche est en cours de codage entropique, les traitements de la boucle d'encodage (transformée, quantification, ...) pourront être appliqués en parallèle au bloc courant. Une architecture d'encodeur de type « pipeline » peut ainsi être réalisée.

Si le mode non-compressé est implémenté en mode repli, puisque le choix de l'activation ou non du mode s'effectue au niveau du codeur entropique ; il n'est pas possible de prévoir la manière dont seront codés les blocs adjacents avant que leur traitement par le codeur entropique ne soit terminé. II faut dans ce cas attendre le résultat du codage entropique et les traitements de la boucle d'encodage et du codeur entropique ne peuvent plus être parallélisés. Lorsque le mode de codage d'un macrobloc n'est connu que tardivement comme c'est le cas lorsque le mode non-compressé est choisi par le codeur entropique, de nombreux blocs fonctionnels ne peuvent démarrer les traitements du macrobloc suivant avant l'arrivée de cette information. En effet, lors d'un changement tardif de mode de codage, les informations contextuelles du macrobloc courant deviennent incohérentes. Lorsqu'il existe un « pipeline » dans la réalisation de l'encodeur, on observe que les informations des macroblocs précédents sont également incohérentes. Le « pipeline » de la boucle d'encodage commence au niveau de l'opérateur de prédiction, puis passe par les opérateurs de transformé, quantification, quantification inverse et transformé inverse, reconstruction et prédiction intra pour revenir au niveau de l'opérateur de prédiction. Un autre « pipeline » démarre en sortie de l'opérateur de quantification et réalise toutes les opérations de codage entropique qui comportent, entre autre, les opérations de binarisation, de codage arithmétique et de choix du codage du macrobloc en mode compressé ou non-compressé. La boucle d'encodage et le codeur entropique peuvent effectuer leurs opérations en parallèle, les deux pipelines n'ont alors pas la même profondeur et ne sont pas synchronisés, le traitement du macrobloc courant par la boucle d'encodage ne peut commencer avant la fin du traitement du macrobloc précédent, alors que le codeur entropique peut commencer les traitements du macrobloc courant avant d'avoir terminé les traitements du macrobloc précédent. Lorsque le codeur entropique choisit le mode non-compressé, la prise en compte de ce nouveau mode de codage par le « pipeline » de la boucle d'encodage provoque l'apparition de données incohérentes en sortie de la boucle d'encodage. Cette incohérence provient par exemple de la prise en compte, lors du codage du macrobloc courant suivant un macrobloc non compressé, d'un macrobloc reconstruit selon la boucle d'encodage qui est différent du macrobloc non-compressé présent dans le flux binaire. La conséquence est que des distorsions sont introduites dans la séquence vidéo lorsque le mode non-compressé est utilisé.

En pratique cette dépendance rend difficile la réalisation d'un encodeur sur plateforme parallèle (multiprocesseur, DSP, FPGA ou ASIC) en présence de macroblocs non-compressés. A titre d'exemple, s'il faut traiter 1620 macroblocs par période de 40 millisecondes et qu'une implémentation donnée permet de satisfaire à cette contrainte temporelle en exécutant en parallèle les opérations de la boucle d'encodage et du codeur entropique, lorsque le mode non-compressé est activé, le traitement en parallèle est rendu impossible et il devient difficile de tenir la contrainte des 40 millisecondes.

Dans la pratique, pour le cas des encodeurs H.264, la plupart des réalisations contournent le problème en n'implémentant pas le mode de codage I_PCM. C'est une solution statistiquement valide puisque les conditions d'apparition du codage I_PCM sont rares. L'inconvénient est qu'il reste possible de générer un flux incorrect du point de vue syntaxique ou sémantique. Ledit flux ne pourra en conséquence pas être décodé.

Une autre solution au problème est de mémoriser au niveau des blocs fonctionnels de l'encodeur vidéo l'état des macroblocs déjà codés et de faire une restauration totale dans un état précédent lorsqu'un macrobloc I_PCM survient. Cette solution présente deux inconvénients majeurs :
- chacun des blocs fonctionnels doit être capable de stocker le volume de données nécessaire à la restauration (échantillons, mode de codage et autres attributs comme les vecteurs de mouvement) ;
- le flot des données est interrompu pendant la restauration. Cette solution impose aux blocs fonctionnels de revenir sur le codage de macroblocs qui ont déjà été codés et donc de mettre en attente les macroblocs.

Un but de l'invention est notamment de pallier les inconvénients précités.

A cet effet l'invention a pour objet un procédé de codage vidéo comportant un mécanisme permettant d'activer ou de désactiver la compression des macroblocs du flux vidéo à coder en fonction de l'efficacité de la compression et fonctionnant dans au moins deux modes, un premier mode de codage normal et un second mode non compressé, ledit procédé étant **caractérisé en ce que :**
- en mode de codage normal, le macrobloc en cours de traitement est compressé par une boucle d'encodage puis par un codeur entropique, ladite compression étant considérée efficace si la taille qu'occupe le macrobloc après compression est sensiblement inférieure à la taille qu'occupe le macrobloc sans compression ;
- dans le cas ou la compression du macrobloc en cours de traitement n'est pas efficace, le mode non compressé est activé, ledit mode non compressé étant caractérisé par le fait que les échantillons correspondant au macrobloc en cours de traitement reconstruit par le décodeur local de la boucle d'encodage sont transmis sans compression en sortie du codeur.

Une variante de ce procédé est **caractérisée en ce que** l'efficacité de la compression est vérifiée en comparant le nombre de bits après compression du macrobloc courant à une valeur seuil.

Une variante de ce procédé est **caractérisée en ce que** le codeur vidéo suit les spécifications de la norme H.264.

Une variante de ce procédé est **caractérisée en ce que** lorsque le mode non compressé est activé, la prédiction spatiale d'un macrobloc intra à partir d'un macrobloc inter voisin est autorisée.

L'invention a aussi pour objet un dispositif de codage vidéo mettant en oeuvre le procédé et **caractérisé en ce qu**'il comporte au moins :
- une boucle d'encodage permettant de compresser les macroblocs en appliquant au moins les méthodes classiques de transformée, de quantification, de reconstruction, de prédiction intra et de compensation de mouvement sur le signal entrant ;
- un codeur entropique réalisant en mode de codage normal une compression du flux d'information en sortie de la boucle d'encodage et comportant des moyens de vérifier l'efficacité de la compression et des moyens pour décider de l'utilisation du mode non compressé.

D'autres caractéristiques et avantages de l'invention apparaitront à l'aide de la description qui suit donnée à titre illustratif et non limitatif, faite au regard des dessins annexés parmi lesquels :
- la figure 1 illustre un exemple de réalisation du procédé selon l'invention ;
- la figure 2 présente un exemple de dispositif de compression vidéo comprenant le procédé selon l'invention.

L'invention a notamment comme avantage de permettre d'exécuter en parallèle les opérations de la boucle d'encodage et du codeur entropique lorsque le mode non-compressé est supporté et donc de réduire le temps d'exécution des opérations.

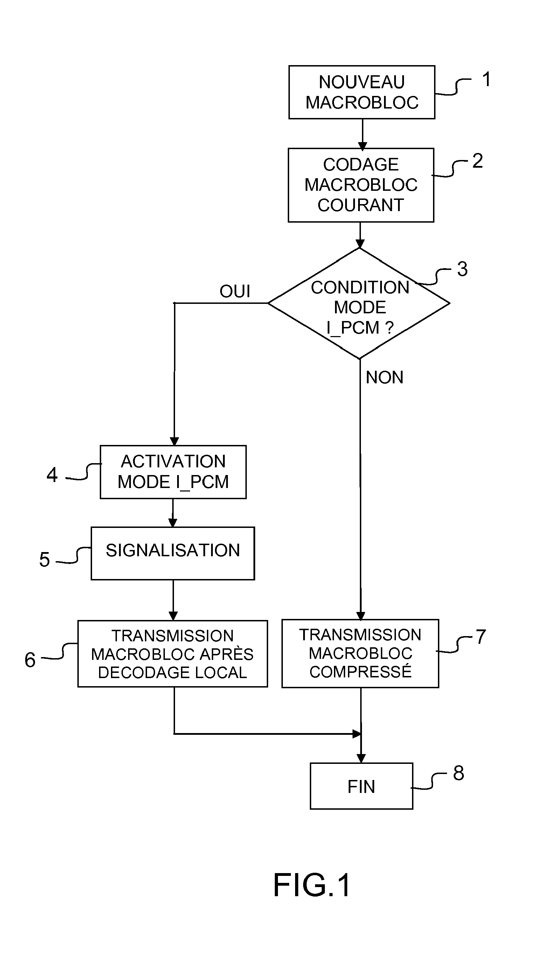

La figure 1 présente par un diagramme un exemple de mise en oeuvre du procédé selon l'invention. Le procédé selon l'invention est composé d'étapes à appliquer pour chaque macrobloc du flux vidéo à compresser. Le procédé permet, dans un premier temps, de détecter si la compression est efficace pour le macrobloc en cours de traitement. Dans un deuxième temps, si la compression n'est pas considérée comme efficace, les échantillons du macrobloc en cours de traitement issus de la sortie du décodeur local sont transmis non compressés. Le décodage local est effectué typiquement par la boucle d'encodage du codeur vidéo afin de maintenir au niveau de l'encodeur l'état interne du décodeur vidéo. Dans le cas contraire, si la compression est considérée efficace, le macrobloc compressé est transmis en sortie du codeur vidéo.

Comme introduit précédemment, un codeur vidéo est typiquement constitué d'une boucle d'encodage et d'un codeur entropique. Dans l'exemple de la figure 1, les notations introduites prennent en compte la terminologie propre à la norme H.264. Ainsi le mode non-compressé est désigné comme étant le mode I_PCM. Le procédé selon l'invention pourra être considéré en dehors du cadre de la norme H.264. Le procédé selon l'invention est exécuté au niveau du codeur entropique pour chaque macrobloc traité par le codeur vidéo.

Le procédé est exécuté dès qu'un nouveau macrobloc est détecté 1 en entrée du codeur. Le procédé selon l'invention traite un flux vidéo compressé macrobloc par macrobloc. Un macrobloc représente une partie d'une image d'un flux vidéo. Cette partie de l'image comprend un ensemble de bloc de pixels. A titre d'exemple, un macrobloc peut représenter 16x16 pixels d'une image. Le macrobloc traité à un instant donné par le procédé est appelé macrobloc courant ou macrobloc en cours de traitement, les deux expressions ayant le même sens.

Le macrobloc en cours de traitement est compressé 2 par la boucle d'encodage puis par le codeur entropique. L'efficacité de la compression est ensuite vérifiée 3.

Comme déjà cité précédemment à titre d'exemple, si le codeur travaille au format 4:2:0 sur 8 bits et que le macrobloc après avoir été compressé occupe plus que 3200 bits, l'utilisation du mode I_PCM est activée 4. Les blocs fonctionnels de la boucle d'encodage du codeur vidéo devront alors être configurés en conséquence. Pour cela, une signalisation est mise en place 5. Les bits générés après compression sont ensuite retirés du flux de bits de sortie du codeur vidéo. Le bloc fonctionnel de la boucle d'encodage réalisant la prédiction intra est configuré de manière à ce qu'il puisse utiliser pour ses prédictions les macroblocs intra et les macroblocs inter. Pour un codeur vidéo respectant la norme H.264, le marqueur constrained_intra_pred_flag est désactivé pour cela. En effet, si ce marqueur est activé, la prédiction spatiale d'un macrobloc intra à partir d'un macrobloc inter voisin est interdite et dans ce cas le macrobloc inter voisin est considéré comme non disponible. Celui-ci prend alors une valeur par défaut, par exemple 128. Si par la suite ce macrobloc inter bascule en mode I_PCM, la prédiction par rapport à la valeur 128 ne sera pas correcte. Le mode I_PCM est considéré comme un mode intra par la norme H.264. Le choix tardif du mode I_PCM revient à faire basculer le mode de codage du macrobloc courant d'un mode intra ou d'un mode inter en un mode intra.

Le macrobloc en cours de traitement est ensuite transmis non compressé après avoir été traité par le décodeur local de la boucle d'encodage. L'exécution du procédé se termine 8.

Si la compression du macrobloc en cours de traitement est efficace 3, le macrobloc est transmis compressé 7 en sortie du codeur et l'exécution du procédé se termine 8.

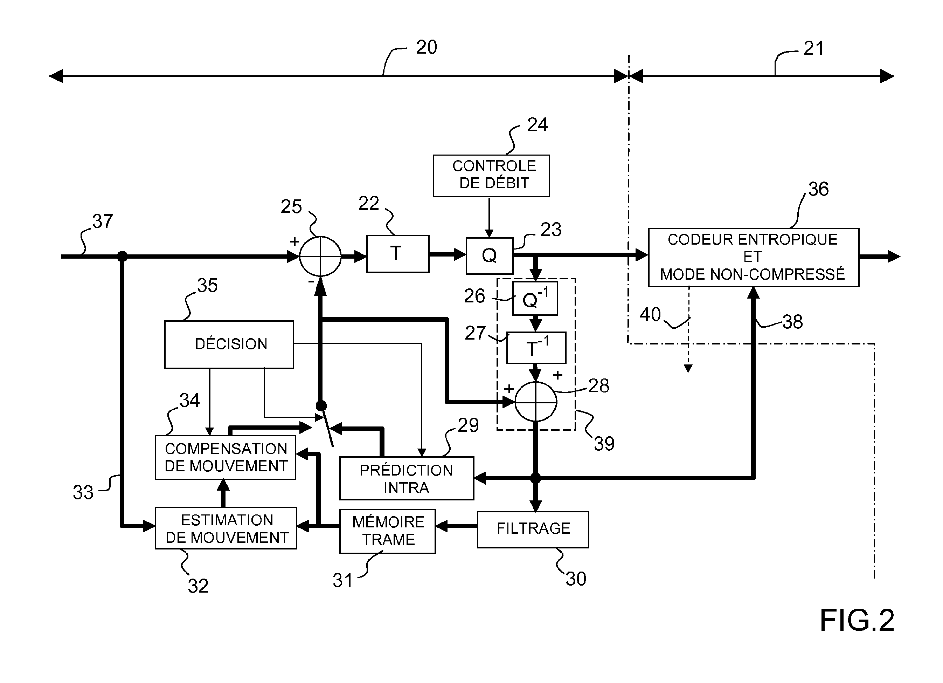

La figure 2 illustre un exemple de dispositif de codage vidéo mettant en oeuvre le procédé selon l'invention. Celui-ci est constitué de deux éléments fonctionnels principaux. Le premier est la boucle d'encodage 20 et le second le codeur entropique 21.

Le principe de la boucle de codage 20 fait partie de l'état de l'art en compression vidéo. On y trouve un bloc 22 prenant en entrée les échantillons de la source après compensation 25, ledit bloc réalisant une transformée permettant de passer du temporel au domaine fréquentiel. Cette transformée peut être par exemple une transformée entière telle que spécifiée dans la norme H.264. Le résultat de la transformée est ensuite quantifié 23 ; cette opération détruit les informations peu visibles par l'oeil humain et réduit le nombre d'informations à transmettre. Cette opération est configurée 24 en fonction, par exemple, du débit cible à garantir en sortie du codeur vidéo. Le signal après quantification 23 est reconstruit à l'aide d'un décodeur local 39 réalisant les opérations quantification inverse 26, de transformée inverse 27 et de reconstruction 28. Lorsque le mode non-compressé n'est pas utilisé, le macrobloc après reconstruction est utilisé par un ensemble de blocs fonctionnels réalisant la prédiction intra 29 et le filtre de boucle 30. Les blocs reconstruits sont mémorisés par la mémoire de trame 31 afin de réaliser l'estimation de mouvement 32 entre le signal en entrée du codeur vidéo 33 et lesdits blocs mémorisés 31. Le résultat de l'estimation de mouvement 32, typiquement un vecteur d'estimation de mouvement, est quant à lui utilisé pour la compensation de mouvement 34 dans le but de créer une prédiction. Un bloc fonctionnel de décision 35 permet de configurer et d'activer la prédiction intra 29 et/ou la compensation de mouvement 34.

La deuxième partie du codeur vidéo 21 est composée notamment d'un bloc fonctionnel réalisant le codage entropique 36. En outre, ce bloc fonctionnel 36 comporte des moyens de décision permettant de déclencher le mode non-compressé de la manière décrite dans l'exemple de la figures 1. Lorsque le bloc de codage 36 décide d'activer le mode non compressé, les échantillons du macrobloc courant après décompression par le décodeur local 39 sont dirigés en entrée du codeur entropique 36 pour ensuite être transmis non compressé en sortie du codeur vidéo. La boucle d'encodage est configurée à cette effet en utilisant un signal 40 de permettant de configurer un ou plusieurs éléments de la boucle d'encodage en fonction de l'implémentation choisie.

Cet exemple de dispositif mettant en oeuvre le procédé selon l'invention permet de traiter en parallèle les opérations de la boucle d'encodage et du codeur entropique lorsque le mode non compressé est supporté par le codeur vidéo tout en garantissant que le flot de bits en sortie du codeur vidéo reste conforme au standard syntaxiquement et sémantiquement.

## Revendications

1. Procédé de codage vidéo comportant un mécanisme permettant d'activer ou de désactiver la compression des macroblocs du flux vidéo à coder en fonction de l'efficacité de la compression et fonctionnant dans au moins deux modes, un premier mode de codage normal et un second mode non compressé, ledit procédé étant **caractérisé en ce que :**
- en mode de codage normal, le macrobloc (1) en cours de traitement est compressé par une boucle d'encodage puis par un codeur entropique (2), ladite compression étant considérée efficace (3) si la taille qu'occupe le macrobloc après compression est sensiblement inférieure à la taille qu'occupe le macrobloc sans compression ;
- dans le cas ou la compression du macrobloc en cours de traitement n'est pas efficace, le mode non compressé est activé (4), ledit mode non compressé étant **caractérisé par le fait que** les échantillons correspondant au macrobloc en cours de traitement reconstruit par le décodeur local de la boucle d'encodage sont transmis sans compression en sortie du codeur (6).

2. Procédé selon la revendication 1 **caractérisé en ce que** l'efficacité de la compression est vérifiée (3) en comparant le nombre de bits après compression du macrobloc courant à une valeur seuil.

3. Procédé selon l'une quelconque des revendications précédentes **caractérisé en ce que** le codeur vidéo suit les spécifications de la norme H.264.

4. Procédé selon l'une quelconque des revendications précédentes **caractérisé en ce que** lorsque le mode non compressé est activé, la prédiction spatiale d'un macrobloc intra à partir d'un macrobloc inter voisin est autorisée.

5. Dispositif de codage vidéo mettant en oeuvre le procédé selon l'une des revendications 1 à 4 et **caractérisé en ce qu'**il comporte au moins :
- une boucle d'encodage (20) permettant de compresser les macroblocs en appliquant au moins les méthodes classiques de transformée (22), de quantification (23), de reconstruction, de prédiction intra (29) et de compensation de mouvement (34) sur le signal entrant (37) ;
- un codeur entropique (21, 36) réalisant en mode de codage normal une compression du flux d'information en sortie de la boucle d'encodage et comportant des moyens de vérifier l'efficacité de la compression et des moyens pour décider de l'utilisation du mode non compressé.
